# EUROPÄISCHE PATENTSCHRIFT

(11) **EP 2 989 948 B1**
(45) Veröffentlichungstag und Bekanntmachung des Hinweises auf die Patenterteilung: **12.07.2017**
(21) Anmeldenummer: 15180691.6
(22) Anmeldetag: 12.08.2015
(51) Int. Cl.: A47J 43/28

(54) **SPATEL, INSBESONDERE FÜR KÜCHENGERÄTE**
SPATULA, ESPECIALLY FOR KITCHEN APPLIANCES
SPATULE, EN PARTICULIER POUR ROBOTS MENAGERS

(30) Priorität: 01.09.2014 DE 102014112518
(43) Veröffentlichungstag der Anmeldung: 02.03.2016
(60) Teilanmeldung: 16174171.5
(73) Patentinhaber: Vorwerk & Co. Interholding GmbH, 42275 Wuppertal (DE)
(72) Erfinder: Kemker, Uwe, 42105 Wuppertal (DE); Lessel, Thomas, 45257 Essen (DE)
(74) Vertreter: Müller, Enno

(56) Entgegenhaltungen:
- CN-U- 202 567 922
- DE-U1-202011 002 630
- GB-A- 2 369 987
- JP-U- 3 151 352
- US-A- 1 851 942
- US-A- 2 939 216
- US-A1- 2012 117 808
- US-B1- 8 387 263
- US-S1- D 436 810

## Beschreibung

Die Erfindung betrifft einen Spatel nach den Merkmalen des Oberbegriffes des Anspruches 1.

Spatel der vorgenannten Art sind im Stand der Technik hinreichend bekannt. Diese Spatel weisen im Wesentlichen einen Griffteil zum Anfassen sowie einen daran angeordneten Arbeitsteil auf, welcher Arbeitsteil die Form eines Schabers mit integrierter Arbeitseinbuchtung, insbesondere Löffelschale, aufweisen kann. Derartige Spatel dienen beispielsweise zur Reinigung eines Mixgefäßes eines Küchengerätes und/ oder zur Entnahme bzw. Hinzugabe von Speisen und/oder zum Rühren. Dabei kann der Nutzer mittels des Spatels durch eine Öffnung des Mixgefäßes hindurch greifen, um die Speisen zu entnehmen oder dem Mixvorgang zuzuführen. Das Hineinlangen in das Mixgefäß ist möglich, da die Öffnung des Mixgefäßes ausreichend groß ist.

Aus der US 2012/0117808 A1 ist ein Löffel bekannt, dessen Arbeitsbereich eine insgesamt sphärisch gekrümmte Gestaltung aufweist. Die Löffelhöhlung setzt sich mit einem kleinen Fortsatz in den Griffbereich fort. Weiter ist auch aus der US 8387263 B1 ein Löffel bekannt, bei dem in gleicher Weise der insgesamt sphärisch gewölbte Löffelbereich sich in eine Einbuchtung im Stielbereich fortsetzt. Der Griffbereich ist durch eine ebenenmäßig um etwa 90° gedrehte, in der Seitenansicht etwa kreisförmige Griffplatte gekennzeichnet, die auch damit den Griffbereich vorgibt. Aus der GB 2369987 A ist auch ein Löffel bekannt, dessen Löffelbereich insgesamt sphärisch gewölbt ist. Der Löffel weist neben einem endseitigen Löffelbereich auch noch einen griffseitigen weiteren Löffelbereich auf, die durch eine Verbindungsrinne verbunden sind. Die US 1851942 A zeigt in gleicher Weise einen Löffel mit einem sphärisch gekrümmten Löffelbereich. Dieser Löffel weist eine rinnenartige Vertiefung im Griffbereich auf, die in den vorderen Löffelbereich ausläuft. Aus der USD 436810 S ist ein Spatel mit einem Schild bekannt.

Ausgehend von dem dargelegten Stand der Technik beschäftigt sich die Erfindung mit der Aufgabenstellung, einen Spatel anzugeben, der einen Mehrwert für den Nutzer bietet, insbesondere in Bezug auf eine Verwendungsvielfalt und einen Handhabungskomfort.

Diese Aufgabe ist beim Gegenstand des Anspruches 1 gelöst, wobei darauf abgestellt ist, dass auf beiden Arbeitsteilseiten jeweils eine Arbeitseinbuchtung ausgebildet ist, dass eine Arbeitseinbuchtung auf der dem Griffteil zugewandten Seite einen rinnenartigen Verjüngungsabschnitt aufweist, dessen Breite quer zu der Längsachse des Spatels in einen Einlaufbereich in den übrigen Bereich der Arbeitseinbuchtung der Hälfte oder weniger der größten Breite der Arbeitseinbuchtung entspricht.

Gegenüber dem vorgenannten Stand der Technik weist der Spatel somit nicht nur eine kreisförmige oder ovale Arbeitseinbuchtung auf, sondern vielmehr einen rinnenartigen Verjüngungsabschnitt, welcher den dem Griffteil zugewandten Bereich der Arbeitseinbuchtung bildet. Der rinnenartige Verjüngungsabschnitt kann dazu verwendet werden, Speisen in kleineren Mengen abzumessen und in das Mixgefäß einzubringen. Beispielsweise ist es möglich, mittels des rinnenartigen Verjüngungsabschnittes Öl. abzumessen und über den Einlaufbereich in den übrigen Bereich der Arbeitseinbuchtung einlaufen zu lassen, wo sich dieses mit weiteren Zutaten vermengt, welche in der Arbeitseinbuchtung vorhanden sind.

Es ist vorgesehen, dass eine größte Länge der Arbeitseinbuchtung einschließlich des Verjüngungsabschnitts parallel zu der Längsachse des Spatels mindestens zwei Mal so groß ist wie die größte Breite der Arbeitseinbuchtung quer zu der Längsachse des Spatels.

Die Begriffe "größte Länge" bzw. "größte Breite" der Arbeitseinbuchtung bezeichnen dabei jeweils die betragsmäßig größte Länge bzw. Breite zwischen zwei Punkten der Öffnungskanten der Arbeitseinbuchtung, welche auf einer gemeinsamen Gerade liegen, die parallel zu der Längsachse des Spatels bzw. quer zu der Längsachse des Spatels verläuft.

Durch diese Ausgestaltung ergibt sich eine längliche Form der Arbeitseinbuchtung, welche sich in Richtung des Griffteils erstreckt. Der geometrische Schwerpunkt (Mittelpunkt) der Arbeitseinbuchtung kann dabei beispielsweise mit dem geometrischen Schwerpunkt des Arbeitsteils übereinstimmen, wobei sich der verjüngte Teilbereich der Arbeitseinbuchtung ausgehend von diesem Schwerpunkt in Richtung des Griffteils erstreckt.

Es empfiehlt sich, dass eine größte Länge der Arbeitseinbuchtung einschließlich des Verjüngungsabschnitts parallel zu der Längsachse des Spatels mindestens zwei Mal so groß bis höchstens zehn Mal, insbesondere drei Mal bis fünf Mal, so groß ist wie eine größte Breite der Arbeitseinbuchtung quer zu der Längsachse des Spatels. Durch diese Ausgestaltung weist die Arbeitseinbuchtung vorteilhaft eine größere Länge als Breite auf, insbesondere eine drei bis fünf Mal so große Länge wie Breite. Dadurch ergibt sich eine langgestreckte Form der Arbeitseinbuchtung, welche endseitig in Form eines Verjüngungsabschnittes in Richtung des Griffteils weist.

Gemäß der hier benutzten Definition sind der Arbeitsteil und der Griffteil in einem Bereich getrennt, wo üblicherweise ein Schild an den Spatel angebracht wird, um die mögliche Eingrifftiefe des Spatels in ein Gefäß zu begrenzen. Vorteilhaft ist dies in Bezug auf die Längsachse des Spatels außerhalb der Arbeitseinbuchtung und außerhalb eines Längenbereiches, in welchem ein Nutzer den Spatel üblicherweise anfasst.

Es ist vorgesehen, dass die Arbeitseinbuchtung einen sich in Richtung des Griffteils erstreckenden Verjüngungsabschnitt aufweist, dessen quer zu der Längsachse des Spatels ausgebildete Breite entlang eines parallel zu der Längsachse ausgerichteten Längenabschnittes, welcher eine Länge von mindestens einem Zehntel der größten Länge der Arbeitseinbuchtung aufweist, größer Null, jedoch höchstens halb so groß ist wie eine quer zu der Längsachse größte Breite der Arbeitseinbuchtung.

Der Verjüngungsabschnitt weist über einen Längenabschnitt mit einer Länge von mindestens einem Zehntel der größten Länge der Arbeitseinbuchtung eine Breite auf, welche höchstens halb so groß ist wie die größte Breite der Arbeitseinbuchtung. Dadurch ergibt sich im Bereich des Verjüngungsabschnittes eine mechanische Schwächung des Arbeitsteils, welche zu einer erhöhten Biegsamkeit des Spatels in diesem Bereich führen kann. Dadurch ist es beispielsweise beim Reinigen eines Mixgefäßes möglich, den Spatel so zu biegen, dass sich dieser optimal an die Konturen der Innenwandung des Mixgefäßes anlegt. Je nach der Art des Materials des Spatels im Bereich des Verjüngungsabschnittes, insbesondere der Elastizität des Materials, kann es in Abhängigkeit von der aufgewendeten Kraft zu einer mehr oder weniger starken Verformung des Spatels kommen. Vorteilhaft kann der Verjüngungsabschnitt parallel zu der Längsachse des Spatels ausgerichtet sein, wobei der Verjüngungsabschnitt insbesondere parallele Randbegrenzungen aufweist. Alternativ ist es jedoch auch möglich, dass der Verjüngungsabschnitt in Richtung des Griffteils spitz zuläuft oder eine anders geartete Variation der Breite aufweist. Die spezielle Ausgestaltung richtet sich nach den individuellen Anforderungen an die Biegsamkeit des Spatels.

Es wird vorgeschlagen, dass eine quer zu der Längsachse des Spatels ausgebildete Breite des Verjüngungsabschnittes einen Betrag von mindestens 25 Prozent bis höchstens 75 Prozent, insbesondere 50 Prozent, des örtlich korrespondierenden Durchmessers des Spatels aufweist. Die Breite des Verjüngungsabschnittes ist somit abhängig von dem Durchmesser des Spatels, wobei es sich in der Praxis als vorteilhaft herausgestellt hat, die Breite des Verjüngungsabschnittes innerhalb der vorgenannten Grenzen auszubilden.

Durch die erfindungsgemäße Ausbildung der Arbeitseinbuchtung wird die Materialstärke des Arbeitsteils insgesamt reduziert, wodurch sich eine größere Flexibilität des Spatels in diesem Bereich erreichen lässt. Die Flexibilität ist insbesondere bei einem Entlangstreichen des Spatels an einer Innenwandung des Mixgefäßes vorteilhaft. Durch die Arbeitseinbuchtung wird ein wesentlicher Teil des Materials des Arbeitsteils ausgespart, so dass der Arbeitsteil insgesamt eine vorteilhafte Federelastizität erhält. Demgegenüber bleibt der Arbeitsteil in eine Richtung im Wesentlichen parallel zu den Arbeitsteilseiten steif und formstabil, so dass sich dadurch keine Nachteile in Bezug auf andere Verwendungen ergeben.

Der Griffteil kann eine Griffeinbuchtung aufweisen, deren Öffnungskanten eine Ebene aufspannen, deren Flächennormale in Bezug auf die Längserstreckung des Spatels im Wesentlichen in die gleiche radiale Richtung weist wie eine Flächennormale einer Ebene, welche durch Öffnungskanten der Arbeitseinbuchtung aufgespannt ist. Der Begriff radiale Richtung bezeichnet dabei eine Richtung ausgehend von einer geometrischen Mittellängsachse des Spatels, bezogen auf einen Querschnitt, in welchem sich die Mittellängsachse als Punkt abbildet. Bevorzugt weisen die vorgenannte Flächennormale der Griffeinbuchtung und die vorgenannte Flächennormale der Arbeitseinbuchtung im Wesentlichen in die gleiche radiale Richtung, wobei darunter nicht nur solche Ausführungen verstanden werden, bei welchen die Flächennormalen exakt in die gleiche radiale Richtung fallen, sondern auch solche, bei welchen die beiden Flächennormalen einen Winkel ungleich Null zueinander aufweisen, insbesondere einen Winkel von bis zu 45°.

Darüber hinaus ist es möglich, dass der Griffteil nur eine Griffeinbuchtung aufweist oder mehrere Griffeinbuchtungen aufweist. Im Fall mehrerer Griffeinbuchtungen können diese in Umfangsrichtung und/ oder in Richtung der Längsachse des Spatels angeordnet sein.

Darüber hinaus sind von der Erfindung auch solche Ausbildungen erfasst, bei welchen die Öffnungskanten der Griffeinbuchtung und/oder der Arbeitseinbuchtung nicht nur eine einzige Ebene, sondern vielmehr eine Vielzahl von Ebenen aufspannen, welche einen Winkel zueinander aufweisen, das heißt deren Flächennormalen nicht parallel zueinander sind. Insbesondere kann eine Griffeinbuchtung bzw. eine Arbeitseinbuchtung so ausgebildet sein, dass die Öffnungskanten mehrere Ebenen aufspannen, deren Flächennormalen entlang einer schraubenförmigen Bahn um die Längsachse rotieren. Es empfiehlt sich auch in diesem Fall, dass eine Flächennormale einer Ebene der Griffeinbuchtung einen Winkel > 0 und < 45° zu einer Flächennormalen einer Ebene der Arbeitseinbuchtung aufweist, so dass der Nutzer der ertasteten Orientierung der Griffeinbuchtung noch eine bestimmte Orientierung der Arbeitseinbuchtung zuordnen kann.

Durch die Ertastung und/ oder Betrachtung dieser räumlichen Orientierung der Griffeinbuchtung in radialer Richtung des Spatels erlangt der Nutzer gleichzeitig eine Information über die räumliche Orientierung des Arbeitsteils bzw. der Arbeitseinbuchtung des Arbeitsteils. Da die Griffeinbuchtung des Griff teils tastbar ist, kann der Nutzer diese Information haptisch wahrnehmen. Es ist nicht erforderlich, dass der Nutzer zusätzlich die Orientierung der Griffeinbuchtung des Arbeitsteils und/oder der Arbeitseinbuchtung sieht. Da die räumliche Orientierung der Griffeinbuchtung oder der Griffeinbuchtungen mit der räumlichen Orientierung des Arbeitsteils korrespondiert, erlangt der Nutzer unmittelbar Kenntnis davon, in welche Richtung die Arbeitsteilseiten derzeit gerichtet sind. Besonders vorteilhaft stimmen die räumlichen Orientierungen von Griffeinbuchtung und Arbeitseinbuchtung in radialer Richtung des Spatels überein, so dass die Arbeitseinbuchtung genau in die Richtung zeigt, in welche auch die von dem Nutzer ertastete Griffeinbuchtung zeigt. Dies ist insbesondere vorteilhaft, wenn der Nutzer den Spatel in einen Mixtopf eingeführt hat und den Arbeitsteil - beispielsweise aufgrund einer Abdeckung des Mixtopfes mit einem Deckel - nicht sehen kann

Darüber hinaus kann die erfindungsgemäße Griffeinbuchtung auch dazu verwendet werden, kleine oder kleinste Zugabemengen, beispielsweise von Gewürzen, abzumessen und in das Mixgefäß des Haushaltsmixgerätes einzubringen. Somit erfüllt der Griffteil des Spatels neben der eigentlichen Grifffunktion ebenso die Funktion eines Werkzeugs zur Abmessung und Zugabe von Zusatzstoffen, wie beispielsweise Gewürzen, in das Mixgefäß.

Der Nutzer kann mit beiden Arbeitsteilseiten gleichermaßen die gewünschten Tätigkeiten ausführen. Im Sinne der Erfindung kann auch vorgesehen sein, dass mehrere Seiten des Griffteils oder nur eine Seite eine oder mehrere Griffeinbuchtungen aufweisen.

### Weiter auf Seite 8, oben, der ursprünglich eingereichten Unterlagen

Darüber hinaus wird vorgeschlagen, dass die Griffeinbuchtung und die Arbeitseinbuchtung an einer Geraden ausgerichtet sind, welche Gerade insbesondere parallel zu der Längserstreckung des Spatels verläuft. Dieser räumliche Bezug von Griffeinbuchtung und Arbeitseinbuchtung ist von dem Nutzer gedanklich besonders einfach und intuitiv zu verstehen. Unter "an einer Geraden ausgerichtet" sind auch solche Ausführungsformen zu verstehen, bei welchen die Arbeitseinbuchtung und die Griffeinbuchtung parallel zu der Geraden ausgerichtet sind, jedoch quer zu dieser Geraden versetzt sind. Hierunter fallen insbesondere auch solche Ausbildungen, bei welchen der Arbeitsteil so geformt ist, dass der geometrische Schwerpunkt der Arbeitseinbuchtung neben der linearen Verlängerung des Griffteils liegt.

Derart geformte Spatel können vorteilhaft zur Reinigung der Innenwandung eines Mixgefäßes eingesetzt werden, da die Arbeitseinbuchtung mit einer gegenüber herkömmlichen Spateln geringeren Verkippung in Kontakt mit der Innenwandung gelangen kann.

Es ist darüber hinaus vorgesehen, dass die Form oder Dimension der Griffeinbuchtung in Richtung der Längserstreckung des Spatels variiert. Somit kann der Nutzer nicht nur die räumliche Orientierung des Spatels ertasten, sondern gleichzeitig auch die Position seiner Hand an dem Spatel in Richtung der Längsachse des Spatels, das heißt die Entfernung zwischen seiner Hand und beispielsweise dem Arbeitsteil. Beispielsweise kann die Griffeinbuchtung in Richtung des Arbeitsteils keilförmig zulaufen und/ oder andere haptische Positionsmarkierungen aufweisen. Anhand der positionsabhängigen Breite der keilförmigen Griffeinbuchtung an dem Griffteil - beispielsweise im Verhältnis zu der Fingergröße des Nutzers - kann der Nutzer seine aktuelle Fingerposition ertasten und ableiten. Darüber hinaus sind auch andere haptische Positionsmarkierungen denkbar, beispielsweise Markierungen ähnlich einer Brailleschrift.

Insgesamt erhält der Nutzer des Spatels durch die Erfindung auch dann eine Information über die Orientierung der Arbeitsteilseiten, wenn die Orientierung des Spatels innerhalb des Mixgefäßes optisch nicht erkennbar ist. Insbesondere kann die Griffeinbuchtung auch eine Fortsetzung der an dem Arbeitsteil angeordneten Arbeitseinbuchtung sein. Im Sinne einer Fortsetzung wird eine Griffeinbuchtung verstanden, welche entweder einstückig mit der Arbeitseinbuchtung ausgebildet ist, oder zumindest die gleiche Orientierung in Richtung der Längserstreckung des Spatels aufweist. Beispielsweise können die Einbuchtungen des Arbeitsteils und des Griffteils entlang einer gemeinsamen Geraden ausgerichtet sein.

Insgesamt ergibt sich durch die Erfindung eine haptische Information für den Nutzer beim Anfassen des Spatels. Der Nutzer kann die räumliche Orientierung der Arbeitsteilseiten anhand der Griffeinbuchtung ertasten, ohne diese sehen zu müssen. Gerade bei Arbeiten im Innenbereich eines Mixgefäßes ist dies von großem Vorteil. Zudem können auch mehrere Griffeinbuchtungen entlang des Umfanges des Griffteils oder entlang dessen Längserstreckung verteilt sein. Zusätzlich kann in allen Fällen eine Veränderung der Griffeinbuchtung in Richtung der Längsachse des Spatels, beispielsweise eine Änderung der Breite oder der Tiefe, die Erkennung der aktuellen Handposition des Nutzers an dem Spatel erleichtern.

Es wird vorgeschlagen, dass der gattungsgemäße Spatel zwischen dem Griffteil und dem Arbeitsteil einen Schild aufweist. Der Schild verhindert ein Herausspritzen der Speisen aus dem Mixgefäß während des Mixvorgangs, indem dieser die Öffnung des Mixgefäßes verschließt oder zumindest abschirmt.

Vorteilhaft ist die in Richtung des Arbeitsteils weisende Seite des Schildes konvex, insbesondere sphärisch, ausgebildet. Dadurch kann der Spatel bis zur Anlage des Schildes im Bereich der Öffnung des Mixgefäßes in das Mixgefäß eingeführt werden. Durch die konvexe Ausbildung des Schildes kann der Spatel relativ zu der Öffnung des Mixgefäßes verschwenkt werden, wobei insbesondere eine runde Öffnung im Wesentlichen verschlossen bleibt und auch während des Betriebs des Haushaltsmixgerätes keine Speisen aus dem Mixgefäß austreten können. Insbesondere ist eine Verschwenkung des Arbeitsteils in Richtung der Innenwandung des Mixgefäßes möglich, wobei die Öffnung durch die konvexe Seite des Schildes verschlossen bleibt. Insbesondere eignet sich eine sphärische Krümmung des Schildes, da diese aufgrund der konstanten Krümmung vorteilhaft gleichbleibende Verschlusseigenschaften bewirken kann. Die in Richtung des Griffteils weisende Seite des Schildes kann vorteilhaft eben oder konkav ausgebildet sein, so dass die Hand des Nutzers an einer möglichst großen Kontaktfläche des Schildes anliegen kann.

Es wird vorgeschlagen, dass der Schild, ein einer Betrachtungsrichtung, in welche sich die Längsachse des Griffbereiches punktförmig abbildet, eine von außen betrachtet zumindest teilweise konvex verlaufende Umfangsrandkante aufweist, die an einem oder mehreren Umfangsbereichen von einem Umfangsrandkantenabschnitt unterbrochen ist, der bezüglich einer stetigen Fortsetzung eines benachbarten konvex verlaufenden Umfangsrandkantenabschnittes innen verläuft. Der Schild weist somit entlang seiner Umfangsrandkante einen oder mehrere, vorzugsweise zwei, Umfangsrandkantenabschnitte auf, die derart gestaltet sind, dass beim Ablegen des Spatels auf eine Unterlage, beispielsweise eine Arbeitsplatte, ein Wegrollen des Spatels verhindert wird. Durch die Position des Umfangsrandkantenabschnittes kann beeinflusst werden, in welchem Winkel die Arbeitsteilseiten relativ zu der Unterlage zum Liegen kommen. Die Umfangsrandkantenabschnitte können beispielsweise entlang einer Sekante eines kreisförmigen oder ovalen Querschnitts ausgebildet sein. Darüber hinaus kann die Umfangsrandkante auch wellenförmig ausgebildet sein, so dass sich in Umfangsrichtung Wellenberge und Wellentäler ergeben. Darüber hinaus kann der Umfangsrandkantenabschnitt auch einen zinnenartigen Verlauf aufweisen, wobei die in Bezug auf die Querschnittsebene von innen nach außen verlaufenden Zinnenendbereiche an einer Geraden orientiert sind. Außerhalb der Umfangsrandkantenabschnitte verläuft die Umfangsrandkante vorzugsweise konvex, insbesondere an der Form eines Kreises oder Ovals orientiert. Im Sinne der Erfindung wird die von außen betrachtet zumindest teilweise konvex verlaufende Umfangsrandkante so unterbrochen, dass der Umfangsrandkantenabschnitt bezüglich einer stetigen Fortsetzung der benachbarten Umfangsrandkantenabschnitte innen verläuft. Die stetige Fortsetzung ist dabei auf den jeweiligen Krümmungsradius der benachbarten Umfangsrandkantenabschnitte bezogen. Dieser örtliche Radius kann beispielsweise über einen Umfangswinkelbereich von 5° gemittelt werden. Alternativ zu Umfangsrandkantenabschnitten sind jedoch auch über den Randbereich des Schildes hervorstehende Ablagenasen denkbar.

Es empfiehlt sich besonders, dass ein den Umfangsrandkantenabschnitt aufweisender Randbereich des Schildes in Längserstreckung des Spatels betrachtet relativ zu einer durch Öffnungskanten einer Arbeitseinbuchtung aufgespannten Ebene einen Winkel ≠ 0° aufweist, bevorzugt einen Winkel zwischen 20° und 70°, besonders bevorzugt einen Winkel von ungefähr 45°, aufweist. Ein Winkel dieser Größenordnung zwischen dem Arbeitsteil und des Umfangsrandkantenabschnittes, d. h. gleichzeitig auch der Unterlage, sorgt dafür, dass flüssige oder auch feste Speiseteile von dem Spatel abtropfen oder abfließen können. Gleichzeitig kann dadurch - je nach dem radialen Überstand des Arbeitsteils über den Schild hinaus - auch erreicht werden, dass der Arbeitsteil nicht in Kontakt mit der Unterlage gelangt.

Schließlich wird vorgeschlagen, dass der Arbeitsteil mindestens zwei Materialbereiche unterschiedlicher Elastizitätsmoduln aufweist, wobei insbesondere ein Materialbereich mit einem größeren Elastizitätsmodul von einem Materialbereich mit einem geringeren Elastizitätsmodul umgeben ist. Der Elastizitätsmodul ist umso größer, je mehr Widerstand ein Material einer elastischen Verformung entgegensetzt. Er ist somit ein Maß für die Steifigkeit eines Körpers, wobei die Steifigkeit gleichzeitig auch von der Geometrie des Körpers abhängt. Dadurch, dass der Materialbereich mit größerem Elastizitätsmodul erfindungsgemäß von einem Materialbereich mit weicherem Elastizitätsmodul umgeben ist, ergibt sich eine größere Verformbarkeit der Oberfläche des Arbeitsteils, so dass sich dieses besonders vorteilhaft der Geometrie des Mixgefäßes anpassen kann. Gleichzeitig erhält der Arbeitsteil durch das innere Material mit größerem Elastizitätsmodul eine entsprechende Steifigkeit, welche benötigt wird, um eine Reinigung des Mixgefäßes durchführen zu können. Bei den Materialien kann es sich beispielsweise um unterschiedliche Kunststoffe handeln. Als Material mit einem geringen Elastizitätsmodul wird im Sinne der Erfindung beispielsweise ein weicher Kunststoff verstanden, welcher einen Elastizitätsmodul unter 1000 N/mm² aufweist. Hierzu gehören beispielsweise Kunststoff wie PVC, PE, TPE oder Nitril. Zu den Materialen mit einem großen Elastizitätsmodul gehören beispielsweise harte Kunststoffe mit einem Elastizitätsmodul größer als 1000 N/mm², beispielsweise PBT oder PMMA. Alternativ kann es sich bei einem Material mit einem großen Elastizitätsmodul auch um ein Metall, beispielsweise Stahl, handeln. Vorzugsweise kann ein Stahlkern von einem Kunststoff mit demgegenüber geringerem Elastizitätsmodul ummantelt sein.

Im Folgenden wird die Erfindung anhand eines Ausführungsbeispiels näher erläutert. Es zeigen:

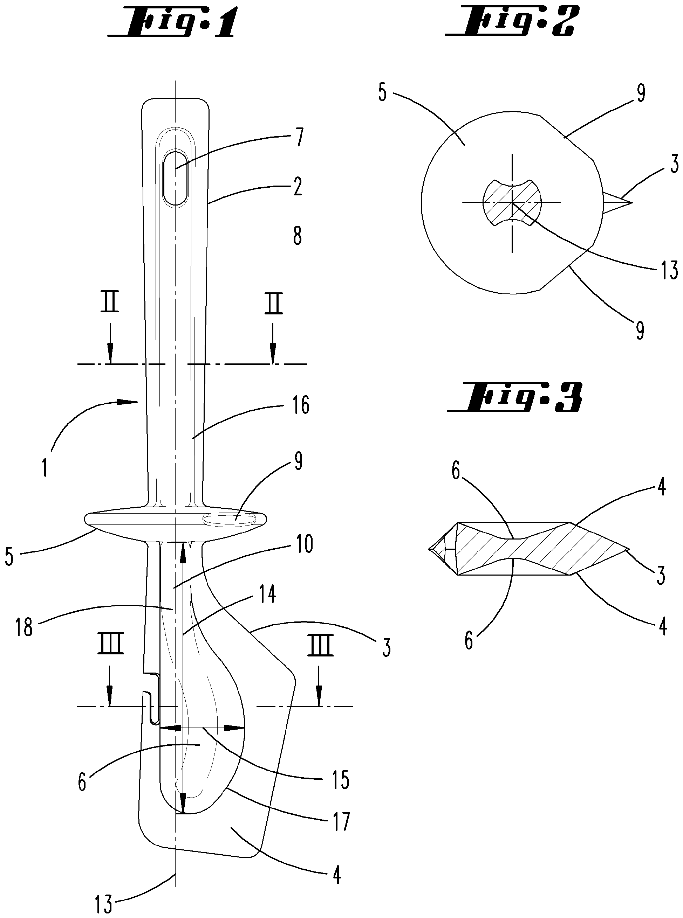

- Figur 1:: einen erfindungsgemäßen Spatel in einer Seitenansicht,
- Figur 2:: den Spatel gemäß Figur 1 in einer entlang II-II geschnittenen Ansicht,
- Figur 3:: den Spatel gemäß Figur 1 in einer entlang III-III geschnittenen Ansicht,

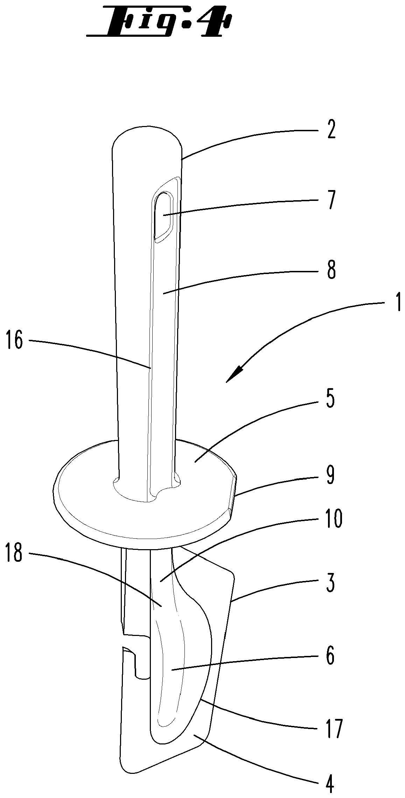

- Figur 4:: den Spatel gemäß Figur 1 in einer perspektivischen Ansicht von oben,
- Figur 5:: den Spatel gemäß Figur 4 in einer Seitenansicht,
- Figur 6:: den Spatel gemäß Figur 5 in einer entlang VI-VI geschnittenen Ansicht.

Der in den Figuren dargestellte Spatel 1 weist einen Griffteil 2 und einen Arbeitsteil 3 auf. Der Griffteil 2 und der Arbeitsteil 3 sind in Längserstreckung des Spatels 1 durch einen Schild 5 getrennt. Der Spatel 1 weist eine Längsachse 13 auf, welche hier der Symmetrieachse des Griffteils 2 entspricht. Der Arbeitsteil 3 weist zwei gegenüberliegende Arbeitsteilseiten 4 auf, welche hier jeweils eine Arbeitseinbuchtung 6 aufweisen. Die Arbeitseinbuchtung 6 ist muldenartig in dem Arbeitsteil 3 ausgebildet, wobei die Mulde eine Öffnungskante 17 aufweist. In dem Bereich der Arbeitseinbuchtung 6, welcher durch die Öffnungskante 17 begrenzt ist, ist eine größte Länge 14 definiert, welche parallel zu der Längsachse 13 des Spatels 1 ausgerichtet ist, sowie eine größte Breite 15, welche quer zu der Längsachse 13 des Spatels 1 gerichtet ist. Konkret ist die größte Länge 14 der Arbeitseinbuchtung 6 gemäß diesem Beispiel ungefähr drei Mal so groß wie die größte Breite 15.

Das Arbeitsteil 3 weist im Wesentlichen die äußere Gestalt eines Schabers auf, während die an den Arbeitsteilseiten 4 ausgebildeten Arbeitseinbuchtungen 6 beispielsweise in Form einer Löffelschale ausgebildet sind. Die Arbeitseinbuchtungen 6 weisen in Richtung des Griffteils 2 gerichtete Verjüngungsabschnitte 10 auf, welche eine relativ zu der maximalen Breite der Arbeitseinbuchtung 6 reduzierte Breite aufweisen. Die Tiefe der Verjüngungsabschnitte 10 kann von den übrigen Bereichen der Arbeitseinbuchtungen 6 abweichen. Der Verjüngungsabschnitt 10 ist rinnenartig ausgebildet und mündet in einem Einlaufbereich 18 in den übrigen Bereich der Arbeitseinbuchtung 6. In Bezug auf den Einlaufbereich 18 entspricht die Breite des Verjüngungsabschnitts 10 quer zu der Längsachse 13 des Spatels der Hälfte oder weniger der größten Breite 15 der Arbeitseinbuchtung 6.

Der Griffteil 2 verfügt beispielsweise über eine Griffeinbuchtung 8. Alternativ wären jedoch auch weitere Griffeinbuchtungen 8 denkbar. Die Griffeinbuchtung 8 weist hier beispielsweise die gleiche räumliche Orientierung wie die Arbeitseinbuchtung 6 des Arbeitsteils 3 auf, d. h., dass die Öffnungskante der Griffeinbuchtung 8 eine Ebene aufspannt, deren Flächennormale in Bezug auf die Längserstreckung des Spatels 1 in die gleiche radiale Richtung weist wie eine Flächennormale einer Ebene, welche durch eine Öffnungskante der Arbeitseinbuchtung 6 aufgespannt ist. Die Griffeinbuchtung 8 kann beispielsweise eine in dem Griffteil 2 ausgebildete Mulde sein. Die Griffeinbuchtung 8 gibt dem Nutzer neben einer haptischen Information über die räumliche Orientierung des Spatels 1 in Umfangsrichtung auch eine haptische Information über die Position der Hand auf dem Griffteil 2 zwischen Griffeinbuchtung 8 und Schild 5 bzw. Arbeitsteil 3. Zusätzlich ist die Griffeinbuchtung 8 auch optisch von dem Nutzer wahrnehmbar. Darüber hinaus kann der Griffteil 2 des Spatels 1 auch eine Durchgangsöffnung 7 aufweisen, welche beispielsweise zum Aufhängen des Spatels 1 verwendet werden kann.

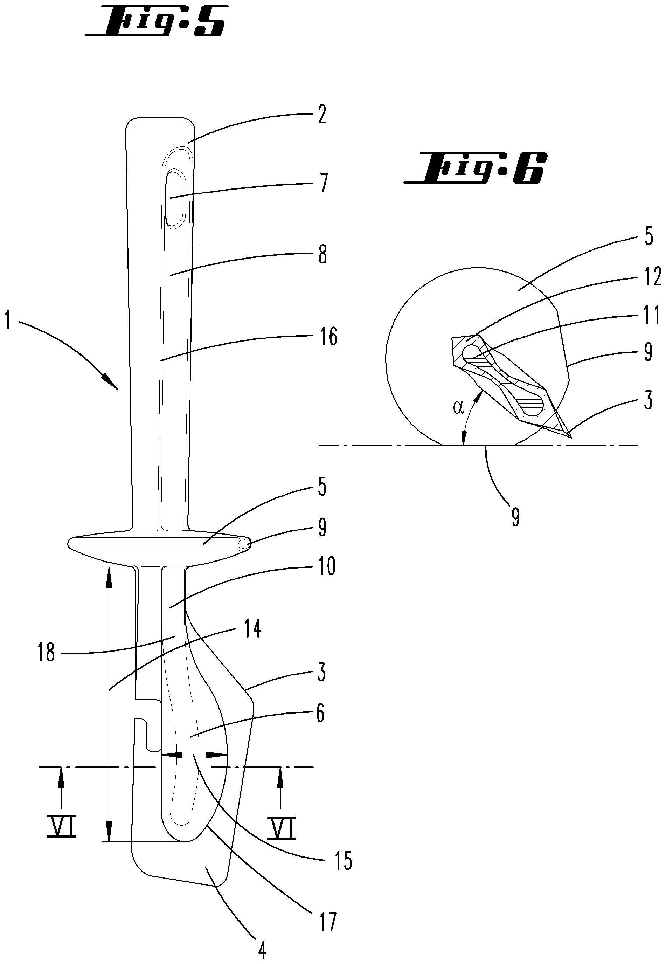

Der Schild 5 weist in Bezug auf einen Querschnitt quer zu der Längserstreckung des Spatels 1 im Wesentlichen eine kreisförmige Querschnittsfläche auf, wobei entlang des Umfangs zwei Umfangsrandkantenabschnitte 9 (hier Abflachungen) ausgebildet sind. In Bezug auf eine radiale Richtung des Schildes 5 ragt ein Teilbereich des Arbeitsteils 3 über den Schild 5 hinaus. Aus einer Richtung entlang der Längsachse 13 des Spatels 1 weist der Randbereich des Schildes 5 im Bereich des Umfangsrandkantenabschnittes 9 zu der durch Öffnungskanten 17 der Arbeitseinbuchtung 6 definierten Ebene einen Winkel α auf, welcher hier ca. 45° beträgt (siehe Figur 6).

Der Arbeitsteil 3 weist gemäß Figur 6 einen ersten Materialbereich 11 und einen zweiten Materialbereich 12 auf, wobei der erste Materialbereich 11 von dem zweiten Materialbereich 12 umgeben ist. Gemäß einer Ausführungsform kann der erste Materialbereich 11 ein Material mit einem größeren Elastizitätsmodul aufweisen als der zweite Materialbereich 12. Dadurch ist die Oberfläche des Arbeitsteils 3, beispielsweise bei einem Kontakt mit einer Innenwandung eines Mixgefäßes, verformbar, während der weniger verformbare erste Materialbereich 11 für die notwendige Basisstabilität des Arbeitsteils 3 sorgt. Als Material mit einem geringen Elastizitätsmodul (beispielsweise unter 1000 N/mm²) kann ein weicher Kunststoff wie PVC, PE, TPE oder Nitril verwendet werden, während als Material mit einem größeren Elastizitätsmodul (beispielsweise über 1000 N/mm²) PBT oder PMMA verwendet werden kann. Neben einem ersten Materialbereich 11 und einem zweiten Materialbereich 12 können auch noch weitere Materialbereiche mit davon abweichenden Materialparametern innerhalb des Arbeitsteils 3 ausgebildet sind. Es empfiehlt sich, dass das Material des zweiten Materialbereiches 12 als äußerer Materialbereich für den Einsatz mit Lebensmitteln geeignet ist. Der erste Materialbereich 11 kann demgegenüber ein beliebiges Material aufweisen. Neben Kunststoffen kommen, insbesondere für den inneren, ersten Materialbereich 11, auch Metalle, beispielsweise Stahl, in Frage.

Die Erfindung funktioniert so, dass der Nutzer den Spatel 1 mittels des Griffteils 2 ergreift und beispielsweise durch die Öffnung eines Mixgefäßes eines Haushaltsmixgerätes (nicht dargestellt) führt. Durch die konvexe Ausbildung der in Richtung des Arbeitsteils 3 weisenden Seite des Schildes 5 ergibt sich eine Formanpassung an den, insbesondere runden, Öffnungsbereich des Mixgefäßes, welche im Betrieb des Haushaltsmixgerätes dafür sorgt, dass Speisen nicht aus dem Mixgefäß herausgeschleudert werden können. Durch die konvexe Form des Schildes 5 ist es darüber hinaus auch möglich, den Spatel 1 relativ zu dem Mixgefäß zu bewegen, ohne dass die Formanpassung aufgehoben wird.

Durch die Ausbildung des Verjüngungsabschnittes 10 verfügt der Spatel 1 im Bereich des in Richtung des Griffteils 2 weisenden Abschnittes der Arbeitseinbuchtung 6 über eine größere Biegsamkeit als in den übrigen Bereichen des Arbeitsteils. Daher kann der Spatel 1 dort, beispielsweise während eines Reinigungsvorgangs der Innenwandung des Mixgefäßes, gebogen oder abgeknickt werden, um der Kontur der Innenwandung optimal folgen zu können. Durch die Ausbildung von Materialbereichen 11, 12 mit unterschiedlichen Elastizitätsmoduln innerhalb des Arbeitsteils 3 kann die Formanpassung zusätzlich unterstützt werden.

Unabhängig von den vorgenannten Ausführungen zu der Biegsamkeit im Bereich des Verjüngungsabschnittes kann auch eine Biegsamkeit weiterer Bereiche des Spatels vorgesehen sein, beispielsweise in anderen Bereichen des Arbeitsteils, aber auch im Bereich des Griffteils. Je nach der geometrischen Form und/oder den verwendeten Materialien in diesen Bereichen kann ein Bereich geschaffen werden, welcher eine größere Biegsamkeit zur Verfügung stellt, um beispielsweise den Spatel für besondere Aufgaben bzw. Einsatzbereiche zu biegen oder gar abzuknicken.

Mittels der an dem Griffteil 2 angeordneten Griffeinbuchtungen 8 ist es dem Nutzer möglich, einzig und allein auf haptische Art und Weise zu erkennen, welche räumliche Orientierung der Spatel 1 aufweist. Die Öffnungskante der Griffeinbuchtung 8 spannt eine Ebene auf, deren Flächennormale in Bezug auf die Längserstreckung des Spatels 1 in die gleiche radiale Richtung weist wie die Flächennormale der Ebene, welche durch die Öffnungskante der Arbeitseinbuchtung 6 aufgespannt ist. Dadurch kann der Nutzer auch ohne eine zusätzliche optische Information erkennen, mit welcher Orientierung er derzeit den Spatel 1 in der Hand hält. Zusätzlich ist die Griffeinbuchtung 8 auch optisch erkennbar. Beispielsweise kann der Nutzer den so ausgebildeten Spatel in Verbindung mit einem Gefäß, beispielsweise einem Mixgefäß, verwenden, wobei er anhand der Griffeinbuchtung erkennen kann, welche räumliche Orientierung der Spatel relativ zu dem Mixgefäß aufweist.

Sofern der Nutzer beispielsweise mittels des Arbeitsteils 3 eine Probe aus dem Mixgefäß entnehmen möchte, kann er haptisch erkennen, mit welcher Orientierung er den Spatel 1 in der Hand hält. Somit kann er den Spatel 1 so weit drehen, bis eine der Arbeitsteilseiten 4, welche vorteilhaft symmetrisch zueinander ausgebildet sind, die dazu benötigte räumliche Orientierung aufweist. Sodann kann der Nutzer eine gewünschte Probe der in dem Mixgefäß enthaltenen Speisen in die löffelschalenartige Arbeitseinbuchtung 6 aufnehmen.

Zusätzlich kann die Griffeinbuchtung 8 verwendet werden, um mengenmäßig geringfügige Zusatzstoffe, wie beispielsweise Gewürze, in das Mixgefäß einzubringen. Insbesondere eignet sich die Griffeinbuchtung 8, um beispielsweise kleinere Salzmengen oder ähnliches abzumessen und ohne Verlust in das Mixgefäß einzubringen. Ebenso kann auch der Verjüngungsabschnitt 10 der Arbeitseinbuchtung 6 genutzt werden, um Zutaten in kleinen Mengen abzumessen und in das Mixgefäß einzubringen. Beispielsweise kann die rinnenartige Ausgestaltung des Verjüngungsabschnitts 10 genutzt werden, um Öl zuerst abzumessen und dann mit weiteren Zutaten, welche in der Arbeitseinbuchtung 6 vorhanden sind, zu vermischen, bevor diese schließlich in das Mixgefäß eingebracht werden.

Die schaberförmig ausgebildete Kontur des Arbeitsteils 3 kann darüber hinaus wie üblich dafür verwendet werden, Speisereste von der Innenwandung des Mixgefäßes abzuschaben. Dazu kann der Spatel 1 relativ zu dem Mixgefäß verschwenkt werden, wobei die Öffnung des Mixgefäßes - wie zuvor erläutert - durch die konvexe Ausgestaltung des Schildes 5 stets formangepasst mit dem Öffnungsbereich des Mixgefäßes verbunden bleibt.

Schließlich kann der Nutzer den Umfangsrandkantenabschnitt 9 (hier in Form einer Abflachung) des Schildes 5 dazu verwenden, den Spatel 1 in einer vordefinierten räumlichen Orientierung auf einer Arbeitsfläche abzulegen. Durch den Umfangsrandkantenabschnitt 9 wird ein Wegrollen des Spatels 1 verhindert. Besonders vorteilhaft weist der den Umfangsrandkantenabschnitt 9 aufweisende Randbereich des Schildes 5 in Längserstreckung des Spatels 1 betrachtet relativ zu der durch die Öffnungskante der Arbeitseinbuchtung 6 aufgespannten Ebene einen so großen Winkel α auf, dass Flüssigkeiten oder Speisen im abgelegten Zustand des Spatels 1 von dem Arbeitsteil 3 abtropfen können, gleichzeitig jedoch ein direkter Kontakt zwischen Arbeitsteil 3 und Arbeitsfläche vermieden wird. Der Winkel α zwischen dem Umfangsrandkantenabschnitt 9 und der Arbeitsteilseite 4 ist so bestimmt, dass das Arbeitsteil 3 bei abgelegtem Spatel 1 nicht die Arbeitsfläche berührt. Alternativ könnte der Arbeitsteil 3 jedoch auch so ausgebildet sein, dass dieser nicht über den Schild 5 übersteht. Auch dann wäre ein Kontakt zwischen Arbeitsteil 3 und Arbeitsfläche verhindert.

### Bezugszeichenliste:

- 1: Spatel
- 2: Griffteil
- 3: Arbeitsteil
- 4: Arbeitsteilseite
- 5: Schild
- 6: Arbeitseinbuchtung
- 7: Durchgangsöffnung
- 8: Griffeinbuchtung
- 9: Umfangsrandkantenabschnitt
- 10: Verjüngungsabschnitt
- 11: Erster Materialbereichs
- 12: Zweiter Materialbereich
- 13: Längsachse
- 14: größte Länge
- 15: größte Breite
- 16: Öffnungskante
- 17: Öffnungskante
- 18: Einlaufbereich

- α: Winkel

## Patentansprüche

1. Spatel (1), insbesondere für Küchengeräte, aufweisend einen Griffteil (2) und einen Arbeitsteil (3) mit zwei in Bezug auf eine Längsachse (13) des Spatels (1) gegenüberliegenden Arbeitsteilseiten (4), **dadurch gekennzeichnet, dass** auf beiden Arbeitsteilseiten (4) jeweils eine Arbeitseinbuchtung (6) ausgebildet ist und dass mindestens eine Arbeitseinbuchtung (6) auf der dem Griffteil (2) zugewandten Seite einen rinnenartigen Verjüngungsabschnitt (10) aufweist, dessen Breite quer zu der Längsachse (13) des Spatels (1) in einem Einlaufbereich (18) in den übrigen Bereich der Arbeitseinbuchtung (6) der Hälfte oder weniger einer größten Breite (15) der Arbeitseinbuchtung (6) entspricht.

2. Spatel (1) nach Anspruch 1, **dadurch gekennzeichnet, dass** eine größte Länge (14) der Arbeitseinbuchtung (6) einschließlich des Verjüngungsabschnitts (10) parallel zu der Längsachse (13) des Spatels (1) mindestens zwei Mal so groß ist wie die größte Breite (15) der Arbeitseinbuchtung (6) quer zu der Längsachse (13) des Spatels (1).

3. Spatel (1) nach Anspruch 1 oder 2, **dadurch gekennzeichnet, dass** die quer zu der Längsachse (13) des Spatels (1) ausgebildete Breite des Verjüngungsabschnitts (10) entlang eines parallel zu der Längsachse (13) ausgerichteten Längenabschnittes, welcher eine Länge von mindestens einem Zehntel der größten Länge (14) der Arbeitseinbuchtung (6) aufweist, größer Null, jedoch höchstens halb so groß ist wie eine quer zu der Längsachse (13) größte Breite (15) der Arbeitseinbuchtung (6).

4. Spatel (1) nach einem der vorhergehenden Ansprüche, **dadurch gekennzeichnet**, **dadurch gekennzeichnet, dass** eine quer zu der Längsachse des Spatels (1) ausgebildete Breite des Verjüngungsabschnittes (10) einen Betrag von mindestens 25 Prozent bis höchstens 75 Prozent, insbesondere 50 Prozent, des örtlich korrespondierenden Durchmessers des Spatels (1) aufweist.

5. Spatel (1) nach einem der vorhergehenden Ansprüche, **dadurch gekennzeichnet, dass** die Kontur des Arbeitsteils (3) schaberförmig ausgebildet ist.

6. Spatel (1) nach einem der vorhergehenden Ansprüche, **dadurch gekennzeichnet, dass** der Griffteil (2) mindestens eine Griffeinbuchtung (8) aufweist, deren Öffnungskanten (16) eine Ebene aufspannen, deren Flächennormale in Bezug auf die Längserstreckung des Spatels (1) im Wesentlichen in die gleiche radiale Richtung weist wie eine Flächennormale einer Ebene, welche durch Öffnungskanten (17) der Arbeitseinbuchtung (6) aufgespannt ist.

7. Spatel (1) nach Anspruch 6, **dadurch gekennzeichnet, dass** die Griffeinbuchtung (8) und die Arbeitseinbuchtung (6) an einer Geraden ausgerichtet sind, welche Gerade insbesondere parallel zu der Längserstreckung des Spatels (1) verläuft.

8. Spatel (1) nach einem der Ansprüche 6 oder 7 **dadurch gekennzeichnet, dass** die Form oder Dimension der Griffeinbuchtung (8) in Richtung der Längserstreckung des Spatels (1) variiert.

9. Spatel (1) nach einem der vorhergehenden Ansprüche, **dadurch gekennzeichnet, dass** zwischen dem Griffteil (2) und dem Arbeitsteil (3) ein Schild (5) angeordnet ist.

10. Spatel (1) nach Anspruch 9, **dadurch gekennzeichnet, dass** der Schild (5) in einer Betrachtungsrichtung, in welcher sich die Längsachse (13) des Griffteils (2) punktförmig abbildet, eine von außen betrachtet zumindest teilweise konvex verlaufende Umfangsrandkante aufweist, die an einem oder mehreren Umfangsbereichen von einem Umfangsrandkantenabschnitt unterbrochen ist, der bezüglich einer stetigen Fortsetzung eines konvex verlaufenden Umfangsrandkantenabschnittes innen verläuft.

11. Spatel (1) nach Anspruch 10, **dadurch gekennzeichnet, dass** ein den Umfangsrandkantenabschnitt (9) aufweisender Randbereich des Schildes (5) in Längserstreckung des Spatels (1) betrachtet relativ zu einer durch Öffnungskanten (17) einer Arbeitseinbuchtung (6) aufgespannten Ebene einen Winkel α ungleich 0° aufweist, bevorzugt einen Winkel zwischen 20° und 70°, besonders bevorzugt einen Winkel von ungefähr 45°, aufweist.

12. Spatel (1) nach einem der Ansprüche 9 bis 11, **dadurch gekennzeichnet, dass** eine in Richtung des Arbeitsteils (3) weisende Seite des Schildes (5) konvex, insbesondere sphärisch, ausgebildet ist.

13. Spatel (1) nach einem der vorhergehenden Ansprüche, **dadurch gekennzeichnet, dass** der Arbeitsteil (3) mindestens zwei Materialbereiche unterschiedlicher Elastizitätsmoduln aufweist, wobei insbesondere ein Materialbereich mit einem größeren Elastizitätsmodul von einem Materialbereich mit einem geringeren Elastizitätsmodul umgeben ist.

## Claims

1. Spatula (1), in particular for kitchen appliances, comprising a handle part (2) and a working part (3) having two working part sides (4) that are opposed with respect to a longitudinal axis (13) of the spatula (1), **characterised in that** a working indentation (6) is arranged on each of the two working part sides (4) and **in that** at least one working indentation (6) comprises a groove-like tapered portion (10) on the side closest to the handle part (2), the width of which, transverse to the longitudinal axis (13) of the spatula (1), in an inlet region (18) in the remaining region of the working indentation (6) corresponds to half or less of the greatest width (15) of the working indentation (6).

2. Spatula (1) according to claim 1, **characterised in that** the greatest length (14) of the working indentation (6) including the tapered portion (10), parallel to the longitudinal axis (13) of the spatula (1), is at least twice as great as the greatest width (15) of the working indentation (6), transverse to the longitudinal axis (13) of the spatula (1).

3. Spatula (1) according to either claim 1 or claim 2, **characterised in that** the width of the tapered portion (10) that is transverse to the longitudinal axis (13) of the spatula (1) along a longitudinal portion that is oriented in parallel with the longitudinal axis (13), which portion has a length of at least one tenth of the greatest length (14) of the working indentation (6), which is greater than zero, but is at most half as great as the greatest width (15) of the working indentation (6) that is transverse to the longitudinal axis (13).

4. Spatula (1) according to any of the preceding claims, **characterised in that** a width of the tapered portion (10) that is transverse to the longitudinal axis of the spatula (1) is from at least 25 percent to at most 75 percent, in particular 50 percent, of the corresponding local diameter of the spatula (1).

5. Spatula (1) according to any of the preceding claims, **characterised in that** the contour of the working part (3) is shaped as a scraper.

6. Spatula (1) according to any of the preceding claims, **characterised in that** the handle part (2) has at least one handle indentation (8), the opening edges (16) of which span a plane of which the surface normal, with respect to the longitudinal extension of the spatula (1), points substantially in the same radial direction as a surface normal of a plane spanned by opening edges (17) of the working indentation (6).

7. Spatula (1) according to claim 6, **characterised in that** the handle indentation (8) and the working indentation (6) are oriented on a straight line that runs in particular in parallel with the longitudinal extension of the spatula (1).

8. Spatula (1) according to either claim 6 or claim 7, **characterised in that** the shape or dimensions of the handle indentation (8) vary in the direction of the longitudinal extension of the spatula (1).

9. Spatula (1) according to any of the preceding claims, **characterised in that** a guard (5) is arranged between the handle part (2) and the working part (3).

10. Spatula (1) according to claim 9, **characterised in that**, in a viewing direction in which the longitudinal axis (13) of the handle part (2) is shown to be punctiform, the guard (5) has a peripheral outer edge that extends in a convex manner at least in part when viewed from outside, which edge is interrupted at one or more peripheral regions by a peripheral outer edge portion which extends inwards with respect to a continuous extension of a peripheral outer edge portion that extends in a convex manner.

11. Spatula (1) according to claim 10, **characterised in that**, when viewed in the longitudinal extension of the spatula (1) relative to a plane spanned by opening edges (17) of a working indentation (6), an edge region of the guard (5) comprising the peripheral outer edge portion (9) has an angle α that is not 0°, preferably an angle of between 20° and 70°, particularly preferably an angle of approximately 45°.

12. Spatula (1) according to any of claims 9 to 11, **characterised in that** a side of the guard (5) pointing in the direction of the working part (3) is convex, in particular spherical.

13. Spatula (1) according to any of the preceding claims, **characterised in that** the working part (3) comprises at least two material regions having different moduli of elasticity, a material region having a higher modulus of elasticity in particular being enclosed by a material region having a lower modulus of elasticity.

## Revendications

1. Spatule (1), en particulier pour appareils de cuisine, comprenant une partie de poignée (2) et une partie de travail (3) avec deux côtés de partie de travail (4) opposés par rapport à un axe longitudinal (13) de la spatule (1), **caractérisée en ce qu'**une échancrure de travail (6) est formée respectivement sur les deux côtés de partie de travail (4), et **en ce qu'**au moins une échancrure de travail (6) comprend, sur le côté faisant face à la partie de poignée (2), une section rétrécie (10) en forme de canal dont la largeur transversale à l'axe longitudinal (13) de la spatule (1) correspond à la moitié ou moins d'une largeur maximale (15) de l'échancrure de travail (6), dans une zone d'entrée (18) dans la zone restante de l'échancrure de travail (6).

2. Spatule (1) selon la revendication 1, **caractérisée en ce qu'**une longueur maximale (14) de l'échancrure de travail (6) comprenant la section rétrécie (10), parallèle à l'axe longitudinal (13) de la spatule (1), est au moins le double de la plus grande largeur (15) de l'échancrure de travail (6) transversale à l'axe longitudinal (13) de la spatule (1).

3. Spatule (1) selon la revendication 1 ou 2, **caractérisée en ce que** la largeur de la section rétrécie (10) prise transversale à l'axe longitudinal (13) de la spatule (1), orientée le long d'une section formée parallèle à l'axe longitudinal (13) comprenant une longueur d'au moins un dixième de la longueur maximale (14) de l'échancrure de travail (6), est supérieure à zéro, mais est au maximum moitié aussi grande que la plus grande largeur (15) transversale à l'axe longitudinal (13) de l'échancrure de travail (6).

4. Spatule (1) selon l'une quelconque des revendications précédentes, **caractérisée en ce qu'**une largeur de la section rétrécie (10) prise transversale à l'axe longitudinal (13) de la spatule (1) comprend une quantité d'au moins 25 pour cent jusqu'à maximum 75 pour cent, plus préférablement de 50 pour cent, du diamètre correspondant localement de la spatule (1).

5. Spatule (1) selon l'une quelconque des revendications précédentes, **caractérisée en ce que** le contour de la partie de travail (3) est en forme de raclette ou racloir.

6. Spatule (1) selon l'une quelconque des revendications précédentes, **caractérisée en ce que** la partie de poignée (2) comprend au moins une échancrure de poignée (8), dont les bords d'ouverture (16) sous-tendent un plan, dont la normale à la surface par rapport à l'extension longitudinale de la spatule (1) est dirigée sensiblement dans la même direction radiale que la normale à la surface d'un plan, qui est sous-tendu par des bords d'ouverture (17) de l'échancrure de travail (6).

7. Spatule (1) selon la revendication 5 ou 6, **caractérisée en ce que** l'échancrure de poignée (8) et l'échancrure de travail (6) sont alignées sur une ligne droite, en particulier s'étendant parallèlement à l'extension longitudinale de la spatule (1).

8. Spatule (1) selon la revendication 5 ou 6, **caractérisée en ce que** la forme ou la dimension de l'échancrure de travail (8) varie dans la direction de l'extension longitudinale de la lame (1).

9. Spatule (1) selon l'une quelconque des revendications précédentes, **caractérisée en ce qu'**une plaque (5) est disposée entre la partie de poignée (2) et la partie de travail (3).

10. Spatule (1) selon la revendication 8, **caractérisé en ce que** la plaque (5), dans une direction de visualisation, dans laquelle l'axe longitudinal (13) de la partie de poignée (2) forme une image ponctuelle, comprend un bord périphérique s'étendant au moins partiellement convexe vu de l'extérieur, qui est interrompu au niveau d'une ou plusieurs zones périphériques par une section de bord périphérique, qui s'étend vers l'intérieur par rapport à une continuation régulière d'une section de bord périphérique convexe.

11. Spatule (1) selon la revendication 10, **caractérisée en ce qu'**une zone périphérique comprenant la section de bord périphérique (9) de la plaque (5) considérée dans l'extension longitudinale de la spatule (1) comprend un angle α non égal à 0°, par rapport à un plan sous-tendu par les bords d'ouverture (17) de l'échancrure de travail (6), de préférence un angle compris entre 20° et 70°, de manière particulièrement préférée un angle d'environ 45°.

12. Spatule (1) selon l'une quelconque des revendications 9 à 11, **caractérisée en ce qu'**un côté de la plaque (5) orienté en direction du côté de la partie de travail (3) est de forme convexe, en particulier sphérique.

13. Spatule (1) selon l'une quelconque des revendications précédentes, **caractérisée en ce que** la partie de travail (3) comprend au moins deux zones de matériau ayant des modules d'élasticité différents, en particulier une zone de matériau avec un module plus grand d'élasticité étant entourée d'une zone de matériau ayant un module d'élasticité plus faible.
